Europäisches Patentamt

(19) European Patent Office

Office européen des brevets

(11) Publication number: **0 100 631**
**A2**

(12) **EUROPEAN PATENT APPLICATION**

(21) Application number: **83304244.3**

(22) Date of filing: **21.07.83**

(51) Int. Cl.³: **B 01 D 46/24**
**B 01 D 46/42, F 02 M 35/024**

(30) Priority: **03.08.82 GB 8222402**

(43) Date of publication of application:
**15.02.84 Bulletin 84/7**

(84) Designated Contracting States:
**AT BE CH DE FR GB IT LI LU NL SE**

(71) Applicant: **Guinea, Peter Graham**
**Unit 83 Barking Industrial Park Alfred's Way**
**Barking Essex IG11 0TJ(GB)**

(72) Inventor: **Guinea, Peter Graham**
**Unit 83 Barking Industrial Park Alfred's Way**
**Barking Essex IG11 0TJ(GB)**

(74) Representative: **Tillbrook, Christopher John**
**c/o Reginald W. Barker & Co. 13, Charterhouse Square**
**London EC1M 6BA(GB)**

(54) **Foam air filter.**

(57) A foam filter element comprises a foam body (17) with a relatively rigid deflector plate (18) secured thereupon or in spaced relationship thereto.

FIG.2

Foam Air Filter

This invention relates to filters and is particularly, but not exclusively concerned with a foam air filter construction to replace a conventional paper filter element, such as a paper cartridge type air filter as is utilised in conjunction with an automobile (internal combusion engine) carburettor.

Although various forms of 'automobile type' filters are known, including paper and certain foam materials, problems of achieving and of maintaining longevity of operational efficacy over a wide range of engine and environmental conditions. Moreover a particular problem with foam material is that direct exposure of the foam element to a direct stream or blast of incoming intake air may result in the foam becoming largely inoperative - that is to say the air may tend to pass in bulk through a particular very localised part of the foam (possibly with associated local clogging) whilst the majority of the foam material is not used and moreover the filtering action is impaired by the local interaction of the air flow with the foam. Additional problems are that foam material is not generally inherently self-supporting and it may be difficult to strike a balance between inadequate thin section and a thicker section which may be unduly bulky and introduce a tortuous long filtering flow path.

Foam filter construction has advantages in regard to ease of cleansing during intermediate stages of filter life and possible longer term resistance to oil and other such products which may be more quickly detremental to paper filter construction. Thus in automobile carburettor use a foam filter may be washed or rinsed at intermediate stages in life to prolong the overall life and efficacy of filter action, whereas in contrast, say, a paper filter cannot really be cleaned, particularly if the impregnated wax paper type where dirt and grit adheres to the waxed paper surface. Nevertheless, hitherto proposed foam materials and constructions have been somewhat crude and simplistic, single-cellular grade - often crudely impregnated with oil in an attempt to achieve filtering efficacy.

According to the invention, a foam filter comprises a body of foam material with a flow deflector plate arranged for deflecting the direct impact of flow from the immediate foam locality.

Such a foam filter construction may replace a proprietary or conventional paper filter in an automobile carburettor air cleaner.

In a particular construction, a foam filter element comprises a generally cylindrical loop of foam material, with the ends of the loop being joined by suitable fastening means such as a staple and/or adhesive, and simultaneously the fastening means securing in position at the join a flow deflector plate disposed so that when the filter is in the operative position the deflector plate is immediately opposite or adjacent a primary flow source and thereby deflect the immediate impact of flow from the foam itself.

The upper and lower circular peripheral edges of the foam are desirably bonded to a bracing stiffening or support rim of relatively denser material such as a flexible rim of synthetic plastics material. The latter may be integrally moulded with the foam and may also provide a resiliently deformable sealing barrier between the body of the air filter container or housing and the foam filter element itself.

Advantageously, the foam material incorporates stiffening elements in the body thereof, for example, synthetic plastics ormetal ribs or meshes.

The foam material may comprise a plurality of integrally-moulded or bonded layers of different density foam; for example a denser foam material towards the inlet side of the filter in order to be effective against the blast of unfiltered air.

The configuration of the deflector plate may be such as to provide a central portion parallel to the local plane of the foam filter body and one or more adjacent peripheral outwardly flared portions away from the foam filter body, whereby air impacting upon the central portion is deflected laterally away from the foam filter body by the or each lateral inclined portion.

The deflector plate may also incorporate a central portion generally transverse to the plane of the central portion and intruding into the thickness of the foam filter body itself, whereby to provide an additional bracing support for the air deflector with respect ot the foam filter body.

A further flanged portion may be provided opposite the main air deflector portion for embracing the thickness of the foam filter body locally - with the intervening transverse portion forming a bridge therebetween. Such a girder-like, cross-section may help stiffen the deflector around the foam body locally.

In a particular construction, an automobile filter assembly comprises a generally cylindrical cannister with an air intake point in one curved peripheral wall thereof and a cylindrical foam filter element disposed within said cylindrical cannister to leave a peripheral marginal portion therebetween for air intake and a central cylindrical region communicating with an air exit aperture in the flat under-side wall of the housing or container.

There now follows a description of a particular embodiment of the invention, by way of example only, with reference to the accompanying drawings, in which:

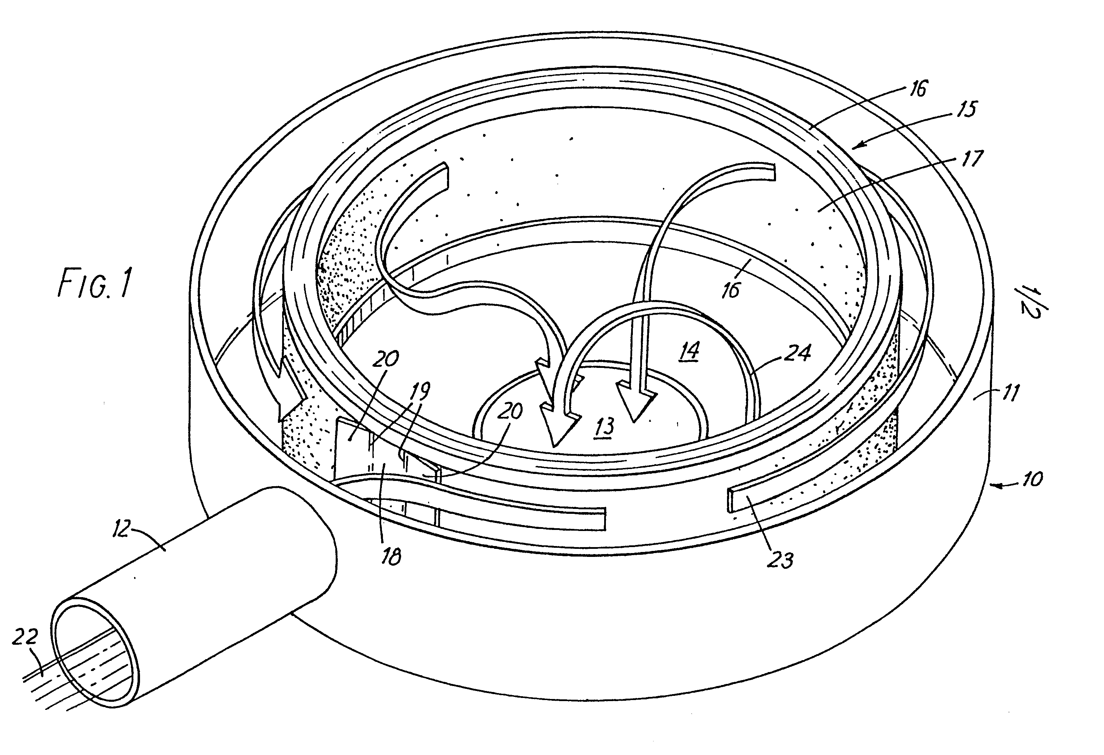

Figure 1 shows a general perspective view of an air filter with a foam filter element according to the invention, and with the cover plate removed for clarity;

Figure 2 shows a plan view of the air filter shown in Figure 1, but on a reduced scale; and

Figures 3a, 3b, 3c and 3d show various alternative deflector plate configurations.

Referring to the drawings, an air filter 10, which is to the type suitable for an automobile carburettor, comprises a generally cylindrical housing or cannister 11 with an air intake duct 12 in a peripheral curved side wall thereof and an air exit aperture 13 in the flat underside 14 thereof.

The filter 10 houses a correspondingly shaped filter element 15 comprising a cylindrical thin wall foam strip 17 forming the main functional filter element and supported between spaced cylindrical reinforcing and sealing strips 16, suitably of synthetic plastics material. The sealing strip 16 may be bonded (for example, by adhesive or heat fusion), to the foam body or may be integrally moulded therewith.

At one portion in the periphery of the foam filter element 15 is located an air deflector plate 18 comprising a central portion generally tangential to the outer surface of the foam filter body 17 and two opposed outer spaced portions inclined outwardly from the foam filter body 17. The delfector plate 18 is fastened at fold lines

- 7 -

19 to the foam filter body 17 proper and in this regard it is convenient to employ adhesive bonding and/or mechanical fastenings such as staples, both to locate the deflector plate itself and to serve as a joining region for the abutting or overlapping ends of the foam filter body 17 itself, when the latter is formed of a flat strip of foam material folded into a circle as shown.

The operation of the air filter 10 is indicated by the various arrows in the drawing. Thus intake air along a flow stream 22 enters the intake duct 12 and impacts locally upon the filter element 15 and is deflected around an outer curved path indicated by arrows 23, where it may permeate the periphery of the foam filter element 17 and enter the internal cylindrical region to flow downwardly as indicated by arrows 24 through the air exit aperture 13. It will thus be appreciated that the overall surface area of the foam filter body 17 is effectively used for air filtering purposes. Moreover, the air deflector plate 18 serves to prevent the local penetration of the initial intake air stream or flow 22 straight through the body of the foam filter material 17; rather the air is deflected by the air deflector plate 18 into divergent paths around the filter element or alternatively into a continuous unidirectional flow therearound.

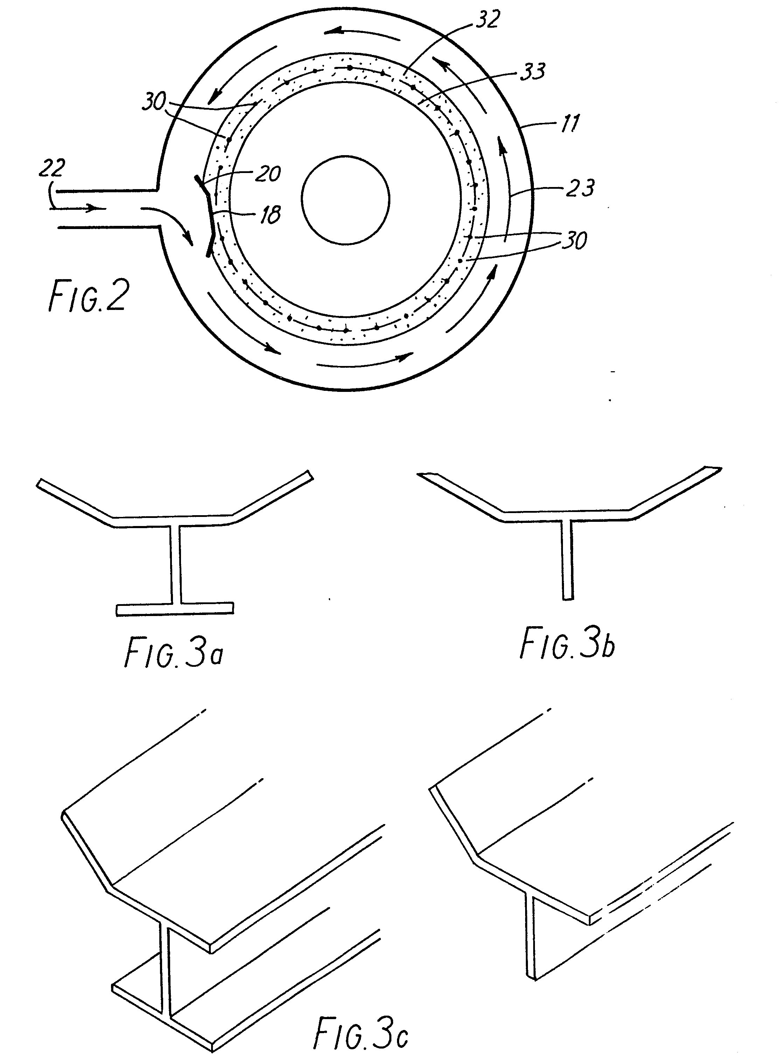

It will also be appreciated that the precise configuration of the air deflector plate will vary according to the configuration of the air filter cartridge itself, but the operating principle remains the same, that is to provide local penetration of the foam under high flow rate conditions. Various configurations are shown in Figures 3a to 3d, including portions intruding into the foam body thickness, both for stiffening of the deflector itself and the foam body locally by virtue of the girder-like cross-section of the deflector.

Supplementary stiffening may be achieved by incorporating discrete stiffening elements 30, for example, of synthetic plastics or metal wire, in the foam body 17 as, say, a series of upright ribs, as shown in Figure 2, or a continuous web or mesh.

The foam material may comprise a plurality of (bonded or integrally moulded) differing density regions - conveniently with the stiffening elements therebetween. Thus, for example, in the Figure 2 construction distinctly different density inner and outer layers 32 and 33 are employed.  The outer layer 32 may be denser, higher filtering performance layer to accomodate the initial full unfiltered air 'blast' and the inner layer 33 mat be relatively less dense to allow free air flow of the preliminarily filtered air.

An advantage of a foam filter element construction is that it may be services from time to time, in particular by wahsing in a suitable solvent such as water and a soap or emulsifier to remove oil, grease, dirt and debris and return the filter to its former operating condition when clean. Such a function is not generally possible with paper cartridge element types, particularly when waxed paper is employed to encourage retention of grit particles.  Although there may be a limit to the number of time the foam filter element can be recycled in this way, it will be appreciated that the effective life is considerably prolonged as compared with conventional filter element constructions. For certain requirements the foam filter element may be impregnated with an oil to improve the dirt or grit retention properties thereof, without unduly restricting the air flow therethrough.

The resilience and flexibility of the foam

0100631

- 10 -

filter element 17 is such that the filter element 15 as a whole may be folded for storage and packing in a configuration other than its normal operating working configuration offering attendant advantages in storage, supply and marketing.

It will also be apparent that the foam filter element construction is more resistant to damage by dropping or knocks than say a paper element construction.

Additional air deflector plates may be provided for additional air intake points.

Although reference has been made to an air filter, it will be appreciated that the filter is applicable for a range of gases or even fluids in special circumstances.

It should be appreciated that the foam filter construction according to the invention may be employed on the intake side of a wide variety of motive power or stationary engines, pumps, compressors or suction machines, whether of the reciprocating piston or rotary vane type, or even in conjunction with ventilation or cooling fans.

Moreover, the term 'automobile' used herein embraces commercial and electric vehicles.

Furthermore, the deflector may be arranged in spaced relationship to the filter body, for example mounted upon the filter housing or enclosure (conveniently at or adjacent an intake duct or aperture), as an alternative to mounting directly upon the filter body.

Several deflectors may be used in conjunction with (i.e. each secured to or arranged in spaced relationship to) a single filter body.

Test performance data upon a foam filter according to the invention shows a much more stable and consistent filtering action. Thus, the pressure drop across the filter does not increase greatly with time - as it would, for example, with a conventional paper element filter, necessitating in the case of an internal combustion engine a fuel mixture adjustment to retain optimum fuel/air combustion mixture.

In alternative constructions, the foam body material may be stiffened by a porous paper and/or card reinforcing layer which may be positioned on the inner or outer periphery thereof or incorporated integrally, for example, sandwiched between adjacent foam layers. Such a reinforcing layer may be cheaper than plastics or metal wire.

It is also possible for the deflector element

- 12 -

to serve as a fastening for the abutted or overlapped ends of foam strips without the need for supplementary separate fasteners, such as staples. Thus the deflector may incorporate a pronged or tongued clip configuration to receive and grip a foam strip end.

0100631

- 13 -

Claims

1. A foam filter element characterised by a foam body (17) with a relatively rigid deflector plate (18) secured thereupon or in spaced relationship thereto.

2. A foam filter element, as claimed in Claim 1, wherein said foam body comprises a plurality of layers of differential density or porosity.

3. A foam filter element, as claimed in Claim 1 or Claim 2, incorporating a plurality of stiffening elements.

4. A foam filter element, as claimed in Claim 3, wherein said stiffening elements comprise wire rods, staples or a mesh layer.

5. A foam filter element, as claimed in Claim 4, wherein said wire is of metal.

6. A foam filter element, as claimed in Claim 4, wherein said wire is of synthetic plastics material.

7. A foam filter element, as claimed in any of the preceding claims, wherein said foam body is integrally moulded with or bonded to an edge sealing reinforcing or stiffening strip.

8. A foam filter element, as claimed in any of the preceding claims, wherein the foam filter

- 14 -

body is generally cylindrical in shape and the deflector plate is attached locally to lie generally tangentially to the outer surface thereof.

9. A foam filter element, as claimed in any of the preceding claims, wherein the foam element comprises a strip of foam material curved into the cylinder and with the free ends secured at a common point to the deflector plate.

10. A foam filter element substantially as hereinbefore described with reference to, and as shown in, the accompnaying drawings.

11. An air filter for an internal combustion engine incorporating a foam filter element according to any of the preceding claims.

12. An air filter, as claimed in Claim 11, for the fuel injector or carburettor of an automobile combustion engine.

*Fig. 1*

FIG.2

FIG.3a

FIG.3b

FIG.3c